# EUROPEAN PATENT SPECIFICATION

(11) **EP 3 755 036 B1**
(45) Date of publication and mention of the grant of the patent: **19.11.2025**
(21) Application number: 18905925.6
(22) Date of filing: 16.02.2018
(51) Int. Cl.: H04W 36/00, H04W 36/16

(54) **USER DEVICE AND WIRELESS COMMUNICATIONS METHOD**
BENUTZERVORRICHTUNG UND DRAHTLOSKOMMUNIKATIONSVERFAHREN
DISPOSITIF UTILISATEUR ET PROCÉDÉ DE COMMUNICATIONS SANS FIL

(43) Date of publication of application: 23.12.2020
(73) Proprietor: NTT DOCOMO, INC., Chiyoda-ku Tokyo 100-6150 (JP)
(72) Inventor: HAPSARI, Wuri Andarmawanti, Tokyo 100-6150 (JP); TAKAHASHI Hideaki, Tokyo 100-6150 (JP); MIN Tianyang, Tokyo 100-6150 (JP)
(74) Representative: Hoffmann Eitle
(86) International application number: PCT/JP2018/005522
(87) International publication number: WO 2019/159328

(56) References cited:
- JP-A- 2013 058 826
- US-A1- 2016 360 462
- ERICSSON (RAPPORTEUR): "Summary on [99b#61][LTE/UAV] Identify potential solutions on mobility enhancement", vol. RAN WG2, no. Reno, Nevada, USA; 20171127 - 20171201, 22 November 2017 (2017-11-22), XP051372598, Retrieved from the Internet <URL:http://www.3gpp.org/ftp/tsg%5Fran/WG2%5FRL2/TSGR2%5F100/Docs/> [retrieved on 20171122]
- LENOVO ET AL: "Potential measurement enhancements for aerial UE", vol. RAN WG2, no. Athens, Greece; 20180226 - 20180302, 15 February 2018 (2018-02-15), XP051399464, Retrieved from the Internet <URL:http://www.3gpp.org/ftp/tsg%5Fran/WG2%5FRL2/TSGR2%5F101/Docs/> [retrieved on 20180215]
- HUAWEI ET AL: "Discussion on New Measurement Events for Drones", vol. RAN WG2, no. Reno, United States; 20171127 - 20171201, 17 November 2017 (2017-11-17), XP051372082, Retrieved from the Internet <URL:http://www.3gpp.org/ftp/tsg%5Fran/WG2%5FRL2/TSGR2%5F100/Docs/> [retrieved on 20171117]
- NTT DOCOMO ET AL: "Summary of email discussion [99#37][LTE/UAV] DL and UL Interference detection", vol. RAN WG2, no. Prague, Czech Republic; 20171009 - 20171013, 8 October 2017 (2017-10-08), XP051343695, Retrieved from the Internet <URL:http://www.3gpp.org/ftp/Meetings_3GPP_SYNC/RAN2/Docs/> [retrieved on 20171008]
- NTT DOCOMO: "Discussion on enhancements to measurement report mechanism for UAV", 3GPP TSG RAN WG2 MEETING #101 R2-1803713, 16 February 2018 (2018-02-16), pages 1 - 9, XP051400730
- NTT DOCOMO, INC.: "Discussion on enhancements to measurement report mechanism for UAV", 3GPP TSG RAN WG2 MEETING #101 R2-1803743, 22 February 2018 (2018-02-22), pages 1 - 10, XP051400820

## Description

### TECHNICAL FIELD

The present invention relates to a user equipment, a radio communication method, and a radio communication system.

### BACKGROUND ART

3rd Generation Partnership Project (3GPP) specifies Long Term Evolution (LTE), and with the aim of further speeding, specifies LTE-Advanced (hereinbelow, the LTE includes the LTE-Advanced).

In the LTE, a user equipment (UE) can transmit to a radio access network (E-UTRAN), specifically, to a radio base station (eNB) a measurement report (Measurement Report) that includes measurement result of reception quality (such as RSRP / RSRQ (Reference Signal Received Power / Reference Signal Received Quality)) of a serving cell (a cell in a connected state (RRC Connected) in a radio resource control (RRC) layer) and a neighbor cell that is formed near the serving cell.

Moreover, in 3GPP, services using small-sized unmanned aerial vehicles (UAVs) such as drones on which a radio communication module similar to the UE is mounted and use cases thereof are being studied (see Non-Patent Document 1).

### PRIOR ART DOCUMENT

### NON-PATENT DOCUMENT

Non-Patent Document 1: 3GPP TR 36.777 V15.0.0 Section 7 Potential enhancements for supporting aerial vehicles, 3rd Generation Partnership Project; Technical Specification Group Radio Access Network; Study on Enhanced LTE Support for Aerial Vehicles (Release 15), 3GPP, December 2017

US 2016/0360462 Al describes a method and apparatus to trigger a handover of a mobile device from a serving cell to a neighbor cell based on signal quality. The mobile device measures signal strength and signal quality for the serving cell. When the signal strength exceeds a network-defined threshold and the signal quality falls below a mobile device defined threshold, the mobile device measures at least one neighbor cell. When a neighbor cell exceeds the network-defined threshold for signal strength and also meets the mobile device defined signal quality threshold, the mobile device sends a measurement report to the serving cell to trigger the handover. The measurement report includes modified values that indicate the serving cell does not meet network-defined threshold values and that the neighbor cell outperforms the serving cell.

ERICSSON (RAPPORTEUR) : "Summary on [99b#61] [LTE/UAV] Identify potential solutions on mobility enhancement" (3GPP DRAFT; R2-1713451 99B61 IDENTIFY POTENTIAL SOLUTIONS ON MOBILITY ENHANCEMENT, vol. RAN WG2, no. Reno, Nevada, USA; 20171127 - 20171201) describes potential solutions on mobility enhancements.

### SUMMARY OF THE INVENTION

Because UE that is mounted on an unmanned aerial vehicle (UAV) flies in the sky above eNBs (cells), unlike the ordinary UE, such UE is less susceptible to receive effect of barriers such as buildings, and an unobstructed propagation environment is easily obtainable. In contrast, however, such UE is susceptible to receive interference from a neighbor cell other than a serving cell.

Because, upon receiving such interference, a threshold for determining whether to perform measurement of a neighbor cell, too, is lowered, sometimes the UE does not perform the measurement and disadvantageously detects a radio link failure (RLF). When this happens, there is a possibility that the UE cannot start a handover and the like that is performed based on the result of measurement of the neighbor cells, and the communication cannot be continued.

The present invention has been made in view of the above circumstances. One object of the present invention is to provide a user equipment and a radio communication method capable of performing measurement of a neighbor cell more reliably depending on a state of interference from the neighbor cell.

A user equipment according to one aspect of the present invention is set out in Claim 1.

A radio communication method according to another aspect of the present invention is provided in Claim 4.

A radio communication system according to another aspect of the present invention is provided in Claim 5.

### BRIEF DESCRIPTION OF DRAWINGS

FIG. 1 is an overall schematic configuration diagram of a radio communication system 10.
FIG. 2 is a functional block diagram of UE 200.
FIG. 3 is a diagram showing a communication sequence performed relating to transmission of a measurement report between eNB 101 and the UE 200.
FIG. 4 is a diagram showing a flow of an operation in which the measurement report is transmitted by the UE 200.
FIG. 5 is a diagram showing an example of ReportConfigEUTRA.

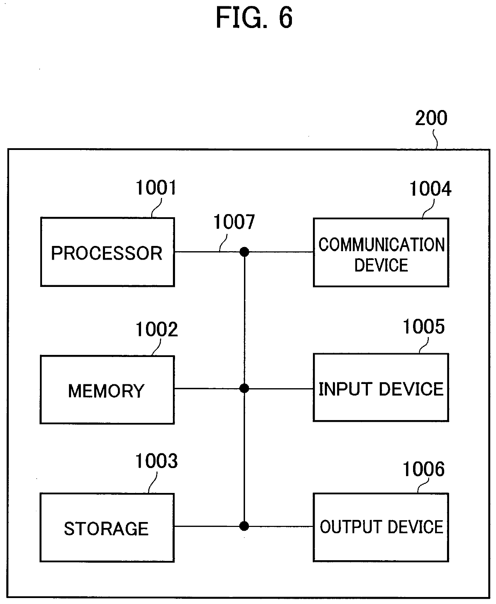

FIG. 6 is a diagram showing an example of hardware configuration of the UE 200.

### DETAILED DESCRIPTION

The invention is defined by the appended set of claims.

A user equipment described herein performs measurement of a serving cell (cell C1) and a neighbor cell (cell C2, C3) and transmits to a radio access network (radio access network 20) a measurement report (Measurement Report). The user equipment includes a judging unit (judging unit 220) that judges whether to transmit the measurement report based on measurement results of the serving cell and the neighbor cell; and a measurement report transmitting unit (measurement report transmitting unit 230) that transmits the measurement report when the judging unit judges to transmit the measurement report. The judging unit judges whether to transmit the measurement report based on an interference indicator (SINR) that indicates a degree of interference in the serving cell and a quality indicator (RSRP) that indicates reception quality of the neighbor cell.

A radio communication method described herein is implemented in a radio communication system (radio communication system 10) and involves performing measurement of a serving cell and a neighbor cell and transmitting a measurement report to a radio access network. The radio communication method includes judging whether to transmit the measurement report based on measurement results of the serving cell and the neighbor cell; and transmitting the measurement report when it is judged to transmit the measurement report at the judging. The judging includes judging whether to transmit the measurement report based on an interference indicator that indicates a degree of interference in the serving cell and a quality indicator that indicates reception quality of the neighbor cell.

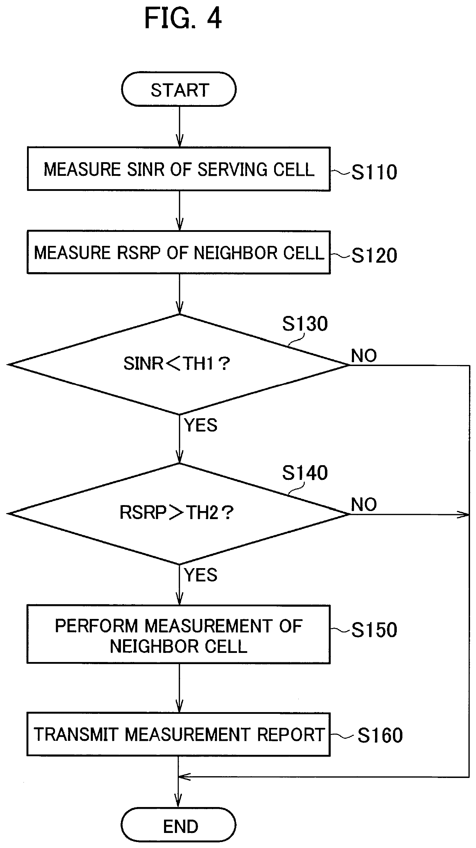

Exemplary embodiments are explained below with reference to the accompanying drawings. Figure 4 presents an embodiment according the invention, whereas the other figures are presented for illustrative purposes only. Note that, the same or similar reference numerals are attached to the same functions and configurations, and the description thereof is appropriately omitted.

### (1) Overall Schematic Configuration of Radio Communication System

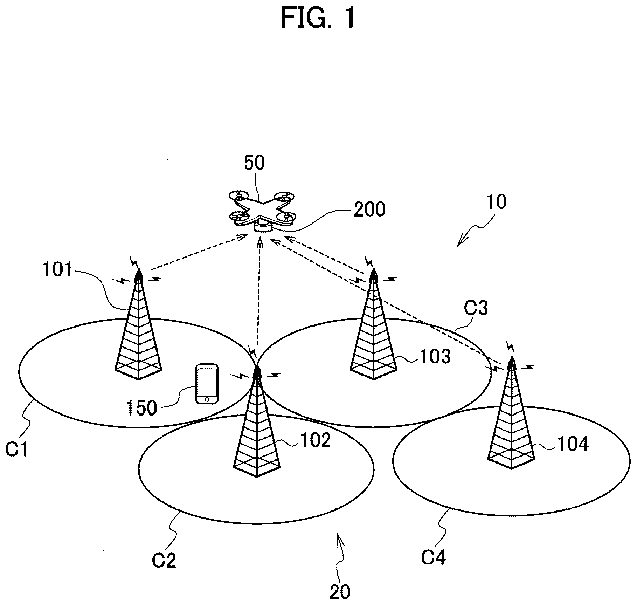

FIG. 1 is an overall schematic configuration diagram of a radio communication system 10 according to the present embodiment. The radio communication system 10 is a radio communication system in accordance with Long Term Evolution (LTE). The radio communication system 10 includes a radio access network 20, a mobile station 150 (hereinafter, "UE 150") and a mobile station 200 (hereinafter, "UE 200").

The radio access network 20 is Evolved Universal Terrestrial Radio Access Network (E-UTRAN) stipulated in 3GPP, and includes radio base stations 101 (hereinafter, "eNB 101") to 104 (hereinafter, "eNB 104"). However, the radio communication system 10 is not necessarily limited to the LTE (E-UTRAN). For example, the radio access network 20 can be a radio access network that includes a radio base station that performs radio communication with the UE 200 (user equipment) that is stipulated as 5G.

The eNBs 101 to 104, the UE 150, and the UE 200 perform radio communication in accordance with the LTE specifications. Particularly, in the present embodiment, the eNBs 101 to 104 form cells C1 to C4, respectively. The UE 150 is an ordinary UE such as a smartphone. On the other hand, the UE 200 is mounted on a small-sized unmanned aerial vehicle (UAV) such as a drone 50.

In the present embodiment, the UE 150 and the UE 200 use the cell C1 as their serving cell. In other words, cells C2 and C3 (neighbor cells) are formed near the cell C1 that is the serving cell. Alternatively, the serving cell can be referred to as PCell or PSCell (in the case of Dual Connectivity) . The cell C4 (distant cell) is formed at a position farther than that of the cells C2 and C3.

The UE 150 and the UE 200 are capable of performing the measurement of the neighbor cell and transmitting a measurement report (Measurement Report) to the radio access network 20. Specifically, the UE 150 and the UE 200 transmit to the radio access network 20 the Measurement Report that includes the reception quality (such as RSRP / RSRQ) of the serving cell and the neighbor cells.

Because the UE 200 mounted on the drone 50 flies in the sky above the eNBs 101 to 104, the UE 200 is less susceptible to receive effect of barriers such as buildings, and an unobstructed propagation environment is easily obtainable. Therefore, the UE 200 can easily receive interference (see a dotted line drawn from the neighbor cells in the figure) from the neighbor cells (and the distant cell) other than the serving cell (cell C1).

### (2) Functional Block Configuration of Radio Communication System

Next, a functional block configuration of the radio communication system 10 will be explained. Specifically, the functional block configuration of the UE 200 is explained.

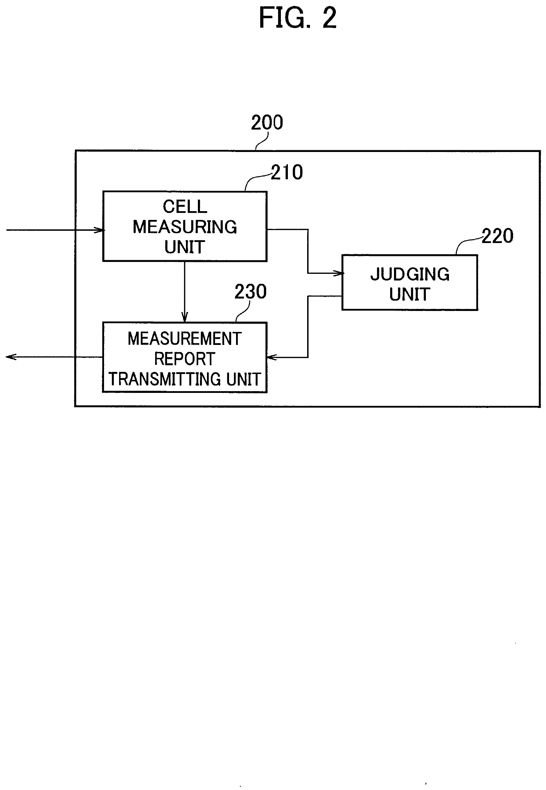

FIG. 2 is a functional block diagram of the UE 200. As shown in FIG. 2, the UE 200 includes a cell measuring unit 210, a judging unit 220, and a measurement report transmitting unit 230.

The cell measuring unit 210 performs the measurement of the serving cell and the neighbor cells. Specifically, the cell measuring unit 210 measures reception quality (such as RSRP / RSRQ) of the serving cell and the neighbor cells. The reception quality such as RSRP / RSRQ is used as a quality indicator in the judging unit 220.

Moreover, the cell measuring unit 210 measures signal-to-interference-plus-noise ratio (SINR) of the serving cell and the neighbor cells. The SINR is used as an interference indicator in the judging unit 220. However, in addition to the SINR, the cell measuring unit 210 can also measure the interference power directly, or can measure another value based on which the interference level can be estimated. In other words, the cell measuring unit 210 can particularly measure a value that can be used as the interference indicator that indicates a degree of interference received from the neighbor cells in the serving cell.

The judging unit 220 judges whether to transmit the Measurement Report based on the results of the measurement of the serving cell and the neighbor cells performed by the cell measuring unit 210.

Specifically, based on the interference indicator that indicates the degree of interference received from the neighbor cells in the serving cell (cell C1) and the quality indicator that indicates the reception quality of the neighbor cells (cell C2 and cell C3), the judging unit 220 judges whether to transmit the Measurement Report to the radio access network 20.

As explained above, in the present embodiment, the SINR is used as a representative interference indicator. Moreover, in the present embodiment, the RSRP (Reference Signal Reception Power) is used as a representative quality indicator. In other words, in the present embodiment, a transmission trigger (SINR-based) for the Measurement Report of the serving cell is different from a transmission trigger (RSRP-based) for the Measurement Report of the neighbor cells.

When the degree of interference indicated by the interference indicator of the serving cell is worse than a first threshold (TH1) and the quality indicator of the neighbor cells is better than a second threshold (TH2), the judging unit 220 judges to transmit the Measurement Report. In other words, when the SINR value of the serving cell falls below the TH1 and the RSRP of the neighbor cells exceeds the TH2, the judging unit 220 judges to transmit the Measurement Report.

Alternatively, the judging unit 220 can judge to transmit the Measurement Report when a number of the neighbor cells for which the quality indicator is better than the second threshold (TH2) is equal to or more than a predetermined number. In other words, instead of transmitting the Measurement Report even when the RSRP of any of the neighbor cells is better than the TH2, the judging unit 220 can judge to transmit the Measurement Report for the first time when the RSRP of the number of the neighbor cells equal to or more than the predetermined number (for example, three neighbor cells) becomes better than the TH2.

The measurement report transmitting unit 230 transmits to the radio access network 20 the Measurement Report that includes the measurement results of the serving cell and the neighbor cells. Specifically, the judging unit 220 transmits to the radio access network 20 the Measurement Report that includes the reception quality (such as RSRP / RSRQ) of the serving cell and the neighbor cells.

When the judging unit 220 judges to transmit the Measurement Report, the measurement report transmitting unit 230 transmits the Measurement Report. In other words, when the degree of interference indicated by the interference indicator of the serving cell becomes worse than the first threshold (TH1) and the quality indicator of the neighbor cells becomes better than the second threshold (TH2), the measurement report transmitting unit 230 transmits the Measurement Report of the serving cell and the neighbor cells.

### (3) Operation of Radio Communication System

Operation of the radio communication system 10 is explained below. Specifically, an operation in which the UE 200 transmits the measurement report is explained. As explained above, in the present embodiment, the UE 200 is mounted on the drone 50 and can easily achieve an unobstructed propagation environment.

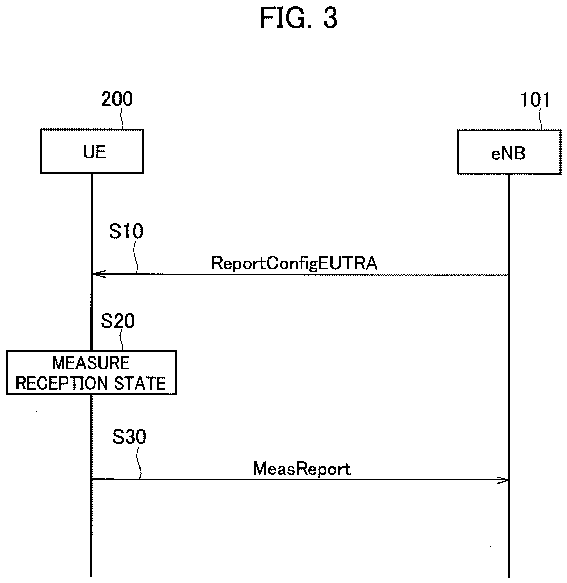

In FIG. 3, a communication sequence performed relating to transmission of the measurement report between the eNB 101 and the UE 200 is shown. In FIG. 4, a flow of an operation in which the measurement report is transmitted by the UE 200 is shown.

In the explanation, the UE 200 uses, as a serving cell, the cell C1 that forms the eNB 101. As shown in FIG. 3, the UE 200 receives ReportConfigEUTRA (Step S10). ReportConfigEUTRA includes RRC Connection Reconfiguration and the like.

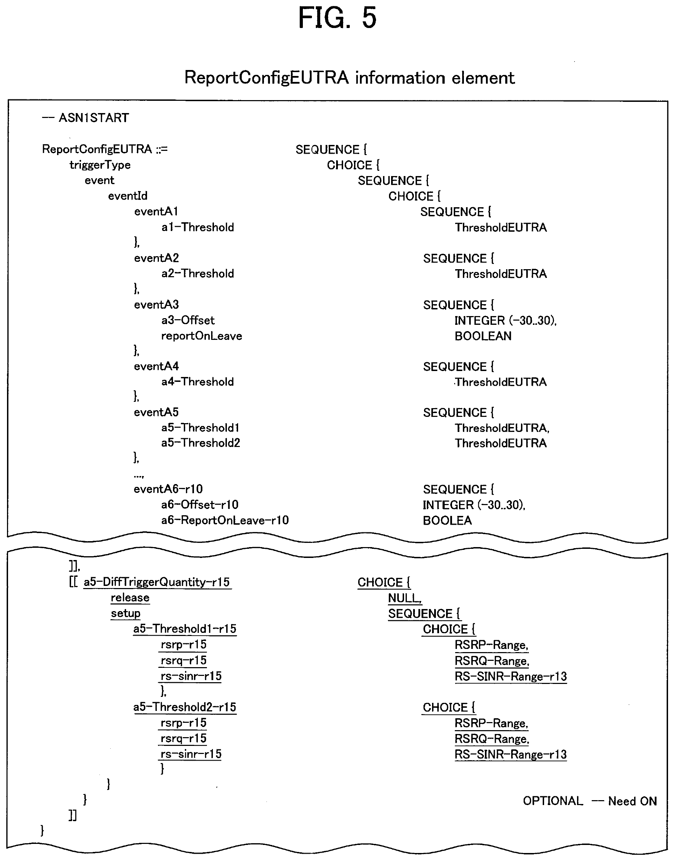

In FIG. 5, an example of ReportConfigEUTRA is shown. As shown in FIG. 5, "a5 - DiffTriggerQuantity" field is included in ReportConfigEUTRA. The "a5-DiffTriggerQuantity" field is stipulated to differentiate the triggers applied to Threshold 1 (TH1) and Threshold 2 (TH2) of Event A5 stipulated in Chapter 5.5.4.6 of TS 36.331.

Furthermore, in TS 36.331, Event A5 is stipulated as below.

Event A5: PCell / PSCell becomes worse than absolute threshold1 AND Neighbor becomes better than another absolute threshold2.

As shown in FIG. 5, SINR, RSRP, and RSRQ can be used as TH1 and TH2, however, as explained above, in the present embodiment, SINR is used for TH1 and RSRP is used for TH2.

In other words, the SINR (interference indicator) is used as the measurement reporting trigger of the serving cell, and the RSRP is used as the measurement reporting trigger of the neighboring cell.

Based on the contents of the received ReportConfigEUTRA, the UE 200 measures the reception state (Step S20). Specifically, the UE 200 measures at least the SINR of the serving cell. Moreover, the UE 200 measures the reception quality (such as RSRP / RSRQ) of the serving cell and the neighbor cells.

When the measured SINR of the serving cell and the RSRP of the neighbor cells fulfill predetermined conditions, the UE 200 transmits the Measurement Report of the serving cell and the neighbor cells to the radio access network 20, specifically, to the eNB 101 (Step S30). Alternatively, it is acceptable if the Measurement Report of the serving cell is not transmitted.

Next, a flow of an operation in which the measurement report is transmitted by the UE 200 will be explained. As shown in FIG. 4, the UE 200 measures the SINR of the serving cell (cell C1) (Step S110). Then, the UE 200 measures the RSRP of the neighbor cells (cell C2 and cell C3) (Step S120). However, the operations of Steps S110 and S120 can be performed in parallel with each other, or the operation of Step S120 can be performed first.

The UE 200 judges whether the measured SINR is below the TH1, that is, whether the SINR is worse than the TH1 (Step S130). Subsequently, the UE 200 judges whether the measured RSRP exceeds the TH2, in other words, whether the RSRP is better than the TH2 (Step S140).

However, the operations of Steps S130 and S140 can be performed in parallel with each other, or the operation of Step S140 can be performed first. The UE 200 periodically performs the measurement of the neighbor cells, and transmit the Measurement Report that includes the latest measurement results of the neighbor cells when it is judged at Steps S130 and S140 that the SINR of the serving cell is below the TH1 and the RSRP of a number of neighbor cells, said number being greater or equal to a predetermined number, exceeds the TH2.

### (4) Effects and Advantages

The following operational effects can be obtained with the embodiments explained above. The UE 200 judges whether to transmit the Measurement Report based on the interference indicator (SINR) of the serving cell (cell C1) and the quality indicator (RSRP) of the neighbor cells.

Therefore, the UE 200 that is mounted on the drone 50 can transmit to the radio access network 20 the Measurement Report of the neighbor cells having better RSRP, even when the interference indicator drops because of the interference received from the neighbor cells. In other words, according to the UE 200, the measurement of the neighbor cells can be performed more reliably depending on the state of the interference received from the neighbor cells.

Accordingly, even when the UE 200 is receiving interference from the neighbor cells, the radio access network 20 can perform a control to reduce the interference based on the Measurement Report received from the UE 200.

As examples of the control explained above, controls such as controlling transmission power of eNB and UE, and eICIC (enhanced Inter-Cell Interference Coordination) can be cited. Moreover, based on the Measurement Report, an appropriate handover of the UE 200 to another cell by which the interference can be reduced, too, can be realized.

In the present embodiment, the UE 200 judges to transmit the Measurement Report when the degree of interference based on the interference indicator (SINR) from the neighbor cells in the serving cell (cell C1) is worse than the first threshold (TH1) and the quality indicator (RSRP) of the neighbor cells is better than the second threshold (TH2).

Therefore, when the interference indicator drops below the TH1 because of the interference received from the neighbor cells, the UE 200 that is mounted on the drone 50 can reliably transmit to the radio access network 20 the Measurement Report of the neighbor cells having better RSRP. Accordingly, the radio access network 20 can realize the control that reduces the interference more reliably. Alternatively, when realizing such a control, a cell having better RSRP can be considered as a handover destination cell.

In the present embodiment, the UE 200 can transmit the Measurement Report for the first time when the RSRP of the neighbor cells equal to or more than predetermined number (for example, three neighbor cells) is better than the TH2. Therefore, information on a plurality of the neighbor cells that can contribute to reduce the interference can be provided to the radio access network 20. Accordingly, the radio access network 20 can realize a control via which the interference is reduced more reliably.

In the present embodiment, the SINR (signal-to-interference-plus-noise ratio) and the RSRP (reference signal reception power) are used as the interference indicator and the quality indicator, respectively. Therefore, the interference can be reduced by using the existing indicators.

In the present embodiment, as explained above, the UE 200 is mounted on the drone 50. Therefore, even in the case of the UE 200 that is susceptible to receive interference from the neighbor cells (and distant cell), the interference can be reduced promptly and reliably.

### (5) Other Embodiments

The present invention has been explained in detail by using the above mentioned embodiments; however, it is self-evident to a person skilled in the art that the present invention is not limited to the embodiments explained herein and that the embodiments can be modified or improved in various ways.

For example, in the embodiments explained above, the UE 200 is mounted on the drone 50 (UAV) . However, as long as the UE 200 is mounted on a flying object that flies in the sky above the eNBs 101 to 104 (approximately 300 meters (m) above the ground), the flying object need not be a drone. Alternatively, the flying object can be a manned aerial vehicle.

Furthermore, in the embodiments explained above, the operations performed when the UE 200 is flying in the sky are disclosed. However, the embodiments explained above can be thought to be modified so as to determine whether a user equipment is flying in the sky based on identification performed by using various methods such as (i) identification using IMEISV (International Mobile Equipment Identity Software Version) or contract type information of the user equipment and (ii) identification based on separation of connection-destination APN (Access Point Name), and to take such identification into consideration. With such configuration, in the present invention, a more flexible configuration and a more efficient operation can be realized.

In the embodiments explained above, an example in which the SINR is used as the interference indicator and the RSRP is used as the quality indicator is explained. However, as explained above, an interference power value and the like can be used as the interference indicator, and the RSRQ and the like can be used as the quality indicator.

In the embodiments explained above, it is judged to transmit the Measurement Report when the degree of interference indicated by the interference indicator (SINR) of the serving cell (cell C1) is worse than the first threshold (TH1) and the quality indicator (RSRP) of the neighbor cells is better than the second threshold (TH2). However, such a judgment need not necessarily be made. For example, when the degree of interference indicated by the interference indicator of the serving cell is better than a predetermined threshold and the quality indicator of the neighbor cell is worse than a predetermined threshold, it can be judged not to transmit the Measurement Report.

Moreover, the block diagram used for explaining the embodiments (FIG. 2) shows functional blocks. Those functional blocks (structural components) can be realized by a desired combination of hardware and / or software. Means for realizing each functional block is not particularly limited. That is, each functional block may be realized by one device combined physically and / or logically. Alternatively, two or more devices separated physically and / or logically may be directly and / or indirectly connected (for example, wired and / or wireless) to each other, and each functional block may be realized by these plural devices.

Furthermore, the UE 200 explained above can function as a computer that performs the processing of the present invention. FIG. 9 is a diagram showing an example of a hardware configuration of the UE 200. As shown in FIG. 9, this device can be configured as a computer device including a processor 1001, a memory 1002, a storage 1003, a communication device 1004, an input device 1005, an output device 1006, a bus 1007, and the like.

The functional blocks of the UE 200 (see FIG. 2) can be realized by any of hardware elements of the computer device or a desired combination of the hardware elements.

The processor 1001, for example, operates an operating system to control the entire computer. The processor 1001 can be configured with a central processing unit (CPU) including an interface with a peripheral device, a control device, a computing device, a register, and the like.

The memory 1002 is a computer readable recording medium and is configured, for example, with at least one of ROM (Read Only Memory), EPROM (Erasable Programmable ROM), EEPROM (Electrically Erasable Programmable ROM), RAM (Random Access Memory), and the like. The memory 1002 can be called register, cache, main memory (main memory), and the like. The memory 1002 can store therein a computer program (computer program codes), software modules, and the like that can execute the method according to the above embodiments.

The storage 1003 is a computer readable recording medium. Examples of the storage 1003 include an optical disk such as CD-ROM (Compact Disc ROM), a hard disk drive, a flexible disk, a magneto-optical disk (for example, a compact disk, a digital versatile disk, a Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

The communication device 1004 is hardware (transmission / reception device) capable of performing communication between computers via a wired and / or wireless network. The communication device 1004 is also called, for example, a network device, a network controller, a network card, a communication module, and the like.

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information there among. The bus 1007 can be constituted by a single bus or can be constituted by separate buses between the devices.

In addition, the manner of notification of information is not limited to the one explained in the embodiments, and the notification may be performed in other manner. For example, the notification of information can be performed by physical layer signaling (for example, DCI (Downlink Control Information), UCI (Uplink Control Information)), upper layer signaling (for example, RRC signaling, MAC (Medium Access Control) signaling, notification information (MIB (Master Information Block), SIB (System Information Block)), other signals, or a combination thereof. In addition, the RRC signaling can be called RRC message, and the RRC signaling can be, for example, RRC Connection Setup message, RRC Connection Reconfiguration message, and the like.

Furthermore, the input / output information can be stored in a specific location (for example, a memory) or can be managed in a management table. The information to be input / output can be overwritten, updated, or added. The information can be deleted after outputting. The inputted information can be transmitted to another device.

The order of the sequences, flowcharts, and the like in the embodiments can be rearranged unless there is a contradiction.

Moreover, in the embodiments explained above, the specific operations performed by the eNBs 101 to 104 can be performed by other network nodes (device). Moreover, functions of each eNB can be provided by combining a plurality of other network nodes.

Moreover, the terms used in this specification and / or the terms necessary for understanding the present specification can be replaced with terms having the same or similar meanings. For example, a channel and / or a symbol can be replaced with a signal (signal) if that is stated. Also, the signal can be replaced with a message. Moreover, the terms "system" and "network" can be used interchangeably.

Furthermore, the used parameter and the like can be represented by an absolute value, can be expressed as a relative value from a predetermined value, or can be represented by corresponding other information. For example, the radio resource can be indicated by an index.

Each of the eNBs 101 to 104 (base station) can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use RRH: Remote Radio Head).

The term "cell" or "sector" refers to a part or all of the coverage area of a base station and / or a base station subsystem that performs communication service in this coverage. In addition, the terms "base station" "eNB", "cell", and "sector" can be used interchangeably in the present specification. The base station can also be referred to as a fixed station, NodeB, eNodeB (eNB), gNodeB (gNB), an access point, a femtocell, a small cell, and the like.

The UE 200 is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

As used herein, the phrase "based on" does not mean "based only on" unless explicitly stated otherwise. In other words, the phrase "based on" means both "based only on" and "based at least on".

Furthermore, the terms "including", "comprising", and variants thereof are intended to be inclusive in a manner similar to "having". Furthermore, the term "or" used in the specification or claims is intended not to be an exclusive disjunction.

Any reference to an element using a designation such as "first", "second", and the like used in the present specification generally does not limit the amount or order of those elements. Such designations can be used in the present specification as a convenient way to distinguish between two or more elements. Thus, the reference to the first and second elements does not imply that only two elements can be adopted, or that the first element must precede the second element in some or the other manner.

Throughout the present specification, for example, during translation, if articles such as a, an, and the in English are added, these articles shall include plurality, unless it is clearly indicated that it is not so according to the context.

As described above, the details of the present invention have been disclosed by using the embodiments of the present invention. However, the description and drawings which constitute part of this disclosure should not be interpreted so as to limit the present invention.

### INDUSTRIAL APPLICABILITY

As explained above, the present invention is useful in that it is possible to provide a user equipment capable of performing, depending on the state of interference from the neighbor cells, measurement of the neighbor cells more reliably.

### EXPLANATION OF REFERENCE NUMERALS

10 radio communication system
20 radio access network
50 drone
101 to 104 eNB
150, 200 UE
210 cell measuring unit
220 judging unit
230 measurement report transmitting unit
1001 processor
1002 memory
1003 storage
1004 communication device
1005 input device
1006 output device
1007 bus

## Claims

1. A user equipment (200) configured to perform measurement of a serving cell (C1; C2; C3; C4) and one or more neighbor cells (C2; C3; C4; C1) and to transmit, to a radio access network (20), a measurement report, the user equipment comprising:
a cell measuring unit (210) configured to perform the measurement of the serving cell and the one or more neighbor cells, wherein the user equipment is configured to periodically perform the measurement of the one or more neighbor cells and the measurement report includes the latest measurement results of the one or more neighbor cells;
a judging unit (220) configured to judge whether to transmit the measurement report based on measurement results of the serving cell and the one or more neighbor cells; and
a measurement report transmitting unit (230) configured to transmit the measurement report when the judging unit judges to transmit the measurement report, wherein
the judging unit is configured to judge to transmit the measurement report when a degree of interference in the serving cell indicated by an interference indicator is worse than a first threshold and a quality indicator that indicates reception quality of a number of neighbor cells is better than a second threshold, the number of neighbor cells being equal to or more than a predetermined number.

2. The user equipment (200) as claimed in claim 1, wherein the interference indicator is a signal-to-interference-plus-noise ratio, and the quality indicator is a reference signal reception power.

3. The user equipment (200) as claimed in claim 1, wherein the user equipment is configured to communicate in the air.

4. A radio communication method implemented in a user equipment (200) performing measurement of a serving cell (C1; C2; C3; C4) and one or more neighbor cells (C2; C3; C4; C1) and transmitting a measurement report to a radio access network, the radio communication method comprising:
performing the measurement of the serving cell and the one or more neighbor cells, wherein the measurement of the one or more neighbor cells is periodically performed and the measurement report includes the latest measurement results of the one or more neighbor cells;
judging whether to transmit the measurement report based on measurement results of the serving cell and the one or more neighbor cells; and
transmitting the measurement report when it is judged to transmit the measurement report at the judging, wherein
the judging includes judging to transmit the measurement report when a degree of interference in the serving cell indicated by an interference indicator is worse than a first threshold and a quality indicator that indicates reception quality of a number of neighbor cells is better than a second threshold, the number of neighbor cells being equal to or more than a predetermined number.

5. A radio communication system (10) comprising the user equipment (200) according to any of claims 1 to 3, and the radio access network (20).

## Patentansprüche

1. Benutzergerät (200), das so konfiguriert ist, dass es eine Messung einer bedienenden Zelle (C1; C2; C3; C4) und einer oder mehrerer Nachbarzellen (C2; C3; C4; C1) ausführt und einen Messbericht an ein Funkzugangsnetz (20) überträgt, wobei das Benutzergerät Folgendes umfasst:
eine Zellenmesseinheit (210), die so konfiguriert ist, dass sie die Messung der bedienenden Zelle und der einen oder mehreren Nachbarzellen ausführt, wobei das Benutzergerät so konfiguriert ist, dass es die Messung der einen oder mehreren Nachbarzellen periodisch ausführt und der Messbericht die letzten Messergebnisse der einen oder mehreren Nachbarzellen einschließt;
eine Bestimmungseinheit (220), die so konfiguriert ist, dass sie auf der Grundlage von Messergebnissen der bedienenden Zelle und der einen oder mehreren Nachbarzellen bestimmt, ob der Messbericht übertragen werden soll; und
eine Messberichtübertragungseinheit (230), die dazu konfiguriert ist, den Messbericht zu übertragen, wenn die Bestimmungseinheit bestimmt, dass der Messbericht übertragen werden soll, wobei
die Bestimmungseinheit so konfiguriert ist, dass sie bestimmt, dass der Messbericht übertragen werden soll, wenn ein Interferenzgrad in der bedienenden Zelle, der durch einen Interferenzindikator angezeigt wird, schlechter als ein erster Schwellenwert ist und ein Qualitätsindikator, der die Empfangsqualität einer Anzahl von Nachbarzellen anzeigt, besser als ein zweiter Schwellenwert ist, wobei die Anzahl von Nachbarzellen gleich oder größer als eine vorbestimmte Anzahl ist.

2. Benutzergerät (200) nach Anspruch 1, wobei der Interferenzindikator ein Signal-zu-Interferenz-plus-Rausch-Verhältnis ist und der Qualitätsindikator eine Referenzsignalempfangsleistung ist.

3. Benutzergerät (200) nach Anspruch 1, wobei das Benutzergerät so konfiguriert ist, dass es in der Luft kommuniziert.

4. Funkkommunikationsverfahren, das in einem Benutzergerät (200) implementiert ist, das eine Messung einer bedienenden Zelle (C1; C2; C3; C4) und einer oder mehrerer Nachbarzellen (C2; C3; C4; C1) ausführt und einen Messbericht an ein Funkzugangsnetz überträgt, wobei das Funkkommunikationsverfahren Folgendes umfasst:
Ausführen der Messung der bedienenden Zelle und der einen oder mehreren Nachbarzellen, wobei die Messung der einen oder mehreren Nachbarzellen periodisch ausgeführt wird und der Messbericht die letzten Messergebnisse der einen oder mehreren Nachbarzellen einschließt;
Bestimmen, ob der Messbericht auf der Grundlage der Messergebnisse der bedienenden Zelle und der einen oder mehreren Nachbarzellen übertragen werden soll; und
Übertragen des Messberichts, wenn bei der Beurteilung bestimmt wird, dass der Messbericht übertragen werden soll, wobei
das Bestimmen das Bestimmen einschließt, dass der Messbericht übertragen werden soll, wenn ein Interferenzgrad in der bedienenden Zelle, der durch einen Interferenzindikator angezeigt wird, schlechter als ein erster Schwellenwert ist und ein Qualitätsindikator, der die Empfangsqualität einer Anzahl von Nachbarzellen anzeigt, besser als ein zweiter Schwellenwert ist, wobei die Anzahl von Nachbarzellen gleich oder größer als eine vorbestimmte Anzahl ist.

5. Funkkommunikationssystem (10) umfassend das Benutzergerät (200) nach einem der Ansprüche 1 bis 3, und das Funkzugangsnetz (20).

## Revendications

1. Équipement utilisateur (200) configuré pour effectuer une mesure d'une cellule de desserte (C1 ; C2 ; C3 ; C4) et d'une ou plusieurs cellules voisines (C2 ; C3 ; C4 ; C1) et pour transmettre, à un réseau d'accès radio (20), un rapport de mesure, l'équipement utilisateur comprenant :
une unité de mesure de cellule (210) configurée pour effectuer la mesure de la cellule de desserte et des une ou plusieurs cellules voisines, dans lequel l'équipement utilisateur est configuré pour effectuer périodiquement la mesure des une ou plusieurs cellules voisines et le rapport de mesure inclut les derniers résultats de mesure des une ou plusieurs cellules voisines ;
une unité de détermination (220) configurée pour déterminer s'il faut transmettre le rapport de mesure sur la base de résultats de mesure de la cellule de desserte et des une ou plusieurs cellules voisines ; et
une unité de transmission de rapport de mesure (230) configurée pour transmettre le rapport de mesure lorsque l'unité de détermination détermine de transmettre le rapport de mesure, dans lequel
l'unité de détermination est configurée pour déterminer de transmettre le rapport de mesure lorsqu'un degré d'interférence dans la cellule de desserte indiqué par un indicateur d'interférence est moins bon qu'un premier seuil et qu'un indicateur de qualité qui indique la qualité de réception d'un nombre de cellules voisines est meilleur qu'un second seuil, le nombre de cellules voisines étant égal ou supérieur à un nombre prédéterminé.

2. Équipement utilisateur (200) selon la revendication 1, dans lequel l'indicateur d'interférence est un rapport signal sur interférence plus bruit, et l'indicateur de qualité est une puissance de réception de signal de référence.

3. Équipement utilisateur (200) selon la revendication 1, dans lequel l'équipement utilisateur est configuré pour une communication radioélectrique.

4. Procédé de communication radio mis en œuvre dans un équipement utilisateur (200) effectuant une mesure d'une cellule de desserte (C1 ; C2 ; C3 ; C4) et d'une ou plusieurs cellules voisines (C2 ; C3 ; C4 ; C1) et transmettant un rapport de mesure à un réseau d'accès radio, le procédé de communication radio comprenant :
la réalisation de la mesure de la cellule de desserte et des une ou plusieurs cellules voisines, dans lequel la mesure des une ou plusieurs cellules voisines est effectuée périodiquement et le rapport de mesure inclut les derniers résultats de mesure des une ou plusieurs cellules voisines ;
le fait de déterminer s'il faut transmettre le rapport de mesure sur la base de résultats de mesure de la cellule de desserte et des une ou plusieurs cellules voisines ; et
la transmission du rapport de mesure lorsqu'il est déterminé de transmettre le rapport de mesure lors de la détermination, dans lequel
la détermination inclut la détermination de transmettre le rapport de mesure lorsqu'un degré d'interférence dans la cellule de desserte indiqué par un indicateur d'interférence est moins bon qu'un premier seuil et qu'un indicateur de qualité qui indique la qualité de réception d'un nombre de cellules voisines est meilleur qu'un second seuil, le nombre de cellules voisines étant égal ou supérieur à un nombre prédéterminé.

5. Système de communication radio (10) comprenant l'équipement utilisateur (200) selon l'une quelconque des revendications 1 à 3, et le réseau d'accès radio (20).
